# EUROPÄISCHE PATENTSCHRIFT

(11) **EP 2 689 808 B1**
(45) Veröffentlichungstag und Bekanntmachung des Hinweises auf die Patenterteilung: **16.11.2022**
(21) Anmeldenummer: 13176950.7
(22) Anmeldetag: 18.07.2013
(51) Int. Cl.: A62C 2/06, F16L 5/04, H02G 3/22, E04G 15/06, E04B 1/94

(54) **BAUGRUPPE FÜR EINE LEITUNGSDURCHFÜHRUNG**
ASSEMBLY FOR A CABLE GLAND
MODULE POUR UN PASSAGE DE LIGNE

(30) Priorität: 23.07.2012 DE 102012212832
(43) Veröffentlichungstag der Anmeldung: 29.01.2014
(73) Patentinhaber: HILTI Aktiengesellschaft, 9494 Schaan (LI)
(72) Erfinder: Münzenberger, Herbert, 65191 Wiesbaden (DE)
(74) Vertreter: Hilti Aktiengesellschaft Corporate Intellectual Property

(56) Entgegenhaltungen:
- EP-A2- 1 847 747
- EP-A2- 2 096 346
- AU-B2- 713 645
- DE-A1-102009 048 651

## Beschreibung

Die Erfindung betrifft eine Baugruppe für eine Leitungsdurchführung zum Eingießen in einem Bauteil, insbesondere aus Beton, mit einem Positionierungsmodul zur Befestigung der Baugruppe an einer Wand oder einer Verschalung, einem Brandschutzmodul, das ein intumeszierendes Brandschutzelement aufweist, und einer länglichen Schalungshülse, die gemeinsam einen Durchführraum für eine Leitung bilden.

Leitungsdurchführungen werden bei der Herstellung von Bauteilen aus Beton oder einem anderen flüssigen Baustoff genutzt, um Wand- oder Deckendurchbrüche für Leitungen, beispielsweise Kabel oder Rohre, in den Bauteilen freizuhalten beziehungsweise in diese zu integrieren. Die Leitungsdurchführungen werden in einer Form positioniert, in die der flüssige Baustoff eingefüllt wird, und halten beim Einfüllen des Baustoffs den Durchbruch in der Wand oder der Decke frei.

Die Leitungsdurchführungen können nach dem Aushärten des Baustoffs entfernt werden. Häufig werden diese aber in der Wand belassen und in diesen zusätzliche Elemente, beispielsweise Dichtungen oder Brandschutzelemente, angeordnet, die bei einem Brand den Durchbruch in der Wand oder Decke verschließen können. Das Brandschutzelement kann aus einem intumeszierenden Material bestehen, das bei Hitzeeinwirkung sein Volumen vergrößert und so den Wanddurchbruch verschließt, siehe zum Beispiel EP 2 096 346 A2.

Eine Baugruppe für eine solche Leitungsdurchführung soll zum einen flexibel verwendbar sein, sodass vor Ort eine schnelle Anpassung an verschiedene Dicken des Bauteils möglich ist bzw. das Brandschutzelement beliebig innerhalb der Durchführung positioniert werden kann. Zum anderen muss die Baugruppe aber auch einfach zu handhaben sein, sodass diese einfach, idealerweise ohne den Einsatz von Werkzeugen, zusammengesetzt werden kann.

Aufgabe der Erfindung ist es, eine Baugruppe für eine Leitungsdurchführung bereitzustellen, die eine schnelle und flexible Anpassung der Baugruppe an die gewünschten Einbaubedingungen ermöglicht, aber einfach zu handhaben ist.

Zur Lösung der Aufgabe ist eine Baugruppe für eine Leitungsdurchführung zum Eingießen in einem Bauteil, insbesondere aus Beton, vorgesehen, gemäß Anspruch 1, mit einem Positionierungsmodul zur Befestigung der Baugruppe an einer Wand oder einer Verschalung, mit einem Brandschutzmodul mit einem intumeszierenden Brandschutzelement und einer länglichen Schalungshülse, die gemeinsam einen Durchführraum für eine Leitung bilden. Am Brandschutzmodul sind Aufnahmen zur reversiblen Befestigung der Schalungshülse und/oder des Positionierungsmoduls vorgesehen.

Bisher werden entweder verschiedene vorgefertigte Leitungsdurchführungen für verschiedene Anwendungen bereitgehalten oder das Brandschutzmodul separat von der Hülse, die einen Durchführraum definiert, hergestellt und nachträglich in dieser montiert. Die erfindungsgemäße Baugruppe bietet den Vorteil, dass die Baugruppe vor Ort einfach zusammengesetzt werden kann, da keine zusätzlichen Verbindungselemente erforderlich sind. Durch einen Austausch der Schalungshülse oder des Positionierungsmoduls ist eine einfache Anpassung an die Einbaubedingungen möglich. Durch ein geeignetes Positionierungsmodul ist beispielsweise eine Anpassung an beliebige Untergründe möglich, während durch eine entsprechende Länge der Schalungshülse eine Anpassung an die gewünschte Bauteildicke möglich ist.

Das Brandschutzmodul kann beispielsweise ringförmig oder zylinderförmig ausgebildet sein, sodass dieses eine Leitung in Umfangsrichtung vollständig umschließen kann und die Durchführung bei einem Brandfall schnell und zuverlässig verschließen kann. Die Aufnahmen sind in einer solchen Ausführungsform vorzugsweise an den axialen Stirnseiten vorgesehen, sodass das Positionierungsmodul und die Schalungshülse einfach in Längsrichtung am Brandschutzmodul montiert werden können und durch die drei Elemente ein zylindrischer Durchführraum gebildet ist.

Am Brandschutzmodul ist beispielsweise zusätzlich ein Verankerungselement, insbesondere aus Metall, vorgesehen, das sich aus dem Brandschutzelement insbesondere radial nach außen erstreckt. Das Verankerungselement ist so ausgebildet, dass sich dieses auch in das expandierte Brandschutzelement erstreckt. Durch das Verankerungselement ist das Brandschutzmodul also in der Baugruppe beziehungsweise im Durchführraum stabilisiert, sodass dieses nach einem Aktivieren und Ausdehnen zuverlässig in der Position im Durchführraum gehalten und der Durchführraum abgedichtet werden kann, auch bei großen Belastungen, beispielsweise durch einen auf das Brandschutzelement auftreffenden Löschwasserstrahl.

Dieses Ankerelement kann beispielsweise ringförmig ausgebildet sein und sich in Umfangsrichtung um das Brandschutzmodul erstrecken, sodass dieses umlaufend im Bauteil verankert ist und nicht verschoben werden kann.

Um unabhängig vom Brandschutzmodul eine zusätzliche Abdichtung der Durchführung zu erreichen, kann an der Baugruppe, insbesondere am Brandschutzmodul, innenseitig eine Dichtmembran vorgesehen sein, die beispielsweise aus Ethylen-Propylen-Dien-Kautschuk (EPDM) besteht. Diese ist vorzugsweise so ausgebildet, dass eine dauerhafte Abdichtung der Durchführung, beispielsweise gegen Feuchtigkeit, Staub oder Schall, gewährleistet werden kann.

Die Baugruppe kann zusätzlich eine Verstärkungshülse aufweisen, die das Brandschutzmodul in Umfangsrichtung und/oder zumindest teilweise an den Stirnseiten abdeckt. Diese Verstärkungshülse dient zum einen dem Schutz des Brandschutzmoduls bei der Herstellung des Bauteils, sodass das Brandschutzmodul durch den flüssigen Baustoff nicht beschädigt werden kann. Zum anderen dient das Brandschutzmodul als Stabilisierung, um die Aufnahmen am Brandschutzmodul für das Positionierungsmodul und die Schalungshülse zu verstärken, sodass die Baugruppe stabiler ausgebildet ist. Die Verstärkungshülse ist beispielsweise mit dem Brandschutzmodul verbunden bzw. mit diesem verklebt. Das Brandschutzmodul kann beispielsweise in die Verstärkungshülse eingespritzt und somit stoffschlüssig mit dieser verbunden sein.

Um ein einfaches Zusammenstecken der Module der Baugruppe zu ermöglichen, sind die Aufnahmen durch ringförmige Schlitze an den Stirnseiten des Brandschutzmoduls gebildet, sodass das Positionierungsmodul sowie die Schalungshülse einfach in das Brandschutzmodul eingeschoben werden können.

Die Schalungshülse bzw. das Positionierungsmodul können zylinderförmig ausgebildet sein. Insbesondere sind diese längenverstellbar ausgebildet, sodass eine einfache und schnelle Anpassung der Baugruppe an die gewünschten Einbaubedingungen, beispielsweise die Lage des Brandschutzmoduls im Bauteil oder die Bauteildicke, möglich ist.

An ihrem dem Brandschutzmodul entgegengesetzten Ende können die Schalungshülse und das Positionierungsmodul durch eine Verschlusskappe verschlossen werden, sodass bei der Herstellung des Bauteils ein Eindringen des flüssigen Baustoffs in den Durchführraum verhindert ist.

Am Positionierungsmodul kann an der dem Brandschutzmodul abgewandten Stirnseite ein radial abstehender Montageflansch vorgesehen sein, mit dem die Baugruppe an einer Form zum Gießen des Bauteils, beispielsweise einer Betonverschalung, befestigt bzw. fixiert werden kann.

Dieser Flansch weist beispielsweise Positionierungselemente auf, die eine genaue Fixierung beziehungsweise Anpassung der Baugruppe an der Form ermöglichen. Dies können speziell angepasste Vorrichtungen sein, um die Baugruppe auf einem unebenem Untergrund, beispielsweise einem Trapezblech, oder auf Schalungen für Betonfertigteile zu montieren. Es ist beispielsweise denkbar, dass zumindest eines der Positionierungselemente einen Magnet aufweist, der auf einem magnetisierbaren Element haften kann.

Die Schalungshülse oder das Positionierungsmodul können beispielsweise aus Kunststoff oder Pappe hergestellt sein, was eine einfache und kostengünstige Herstellung ermöglicht.

In einer bevorzugten, alternativen Ausführungsform der erfindungsgemäßen Baugruppe ist das Positionierungsmodul ein vorzugsweise zylindrischer Vollkörper. Um ein einfaches Zusammenstecken des Positionierungsmoduls und des Brandschutzmoduls zu ermöglichen, ist das Positionierungsmodul mit einem Rand bzw. einem Flansch versehen. Dabei ist der Hauptkörper des Positionierungsmoduls so dimensioniert, dass er in die durch das Brandschutzmodul gebildet Durchführöffnung eingeschoben werden kann, und das Brandschutzmodul an dem Rand bzw. dem Flansch ansteht. Der Durchmesser des Vollkörpers wird zweckmäßig so gewählt, dass dieser die durch das Brandschutzmodul und gegebenenfalls auch noch die Schalungshülse gebildete Durchführöffnung vorzugsweise vollständig ausfüllt und insbesondere abdichtet. Dies verhindert ein zu tiefes Einführen des Positionierungsmoduls während des Zusammensetzens der Baugruppe bzw. ein Verschieben des Positionierungsmoduls in Richtung des Brandschutzmoduls beim Erstellen des Bauteils und sichert damit die Position des Brandschutzmoduls innerhalb der Durchführöffnung.

Über die Dicke des Randes bzw. des Flansches kann die Einbautiefe des Brandschutzmoduls in das zu erstellende Bauteil gewählt werden, so dass eine einfache und schnelle Anpassung der Baugruppe an die gewünschten Einbaubedingungen möglich ist.

In dieser Ausführungsform besteht das Positionierungsmodul bevorzugt aus einem günstigen Kunststoff, wie beispielsweise Polystyrol.

Alternativ kann das Positionierungsmodul auch in Form einer Platte gebildet sein, auf die das Brandschutzmodul einfach aufgesetzt werden kann. Zur Fixierung der Lage des Brandschutzmoduls, kann die Platte mit einer zylindrischen Erhebung versehen sein, auf die das Brandschutzmodul gesteckt wird und somit dessen Position festlegt.

Das Positionierungsmodul wird in den beiden zuletzt genannten Ausführungsformen beispielsweise mittels Befestigungselementen, wie Nägel, an der Schalung fixiert.

Weitere Vorteile und Merkmale ergeben sich aus der nachfolgenden Beschreibung in Verbindung mit den beigefügten Zeichnungen. In diesen zeigen:
- Figur 1:: eine Explosionsdarstellung einer erfindungsgemäßen Baugruppe,
- Figuren 2a und 2b:: verschiedene Herstellungsschritte zur Herstellung eines Bauteils mit einer erfindungsgemäßen Baugruppe,
- Figur 3:: ein Bauteil mit einer erfindungsgemäßen Baugruppe, und
- Figur 4:: eine Detailansicht des Brandschutzmoduls der Baugruppe aus Figur 1.

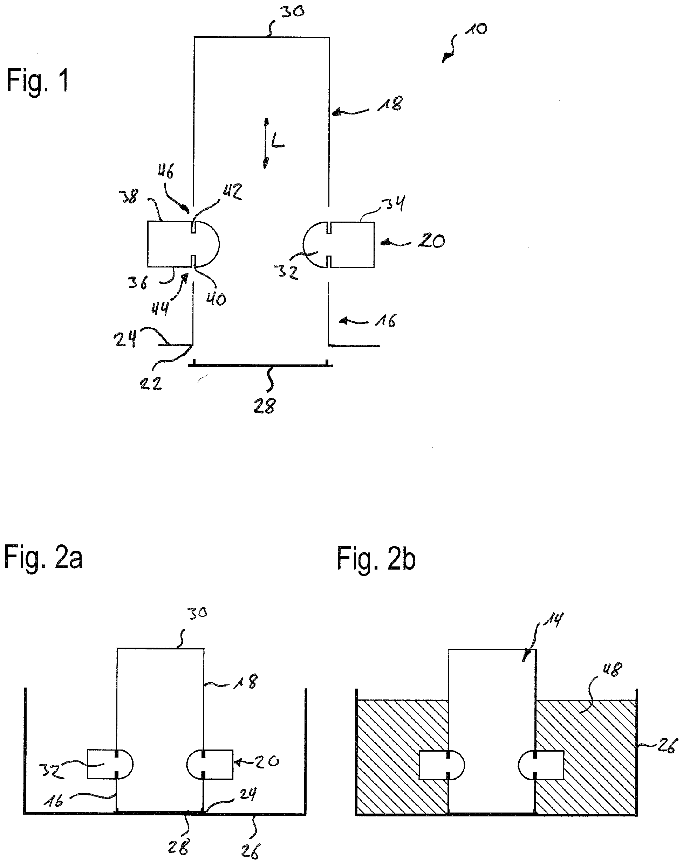

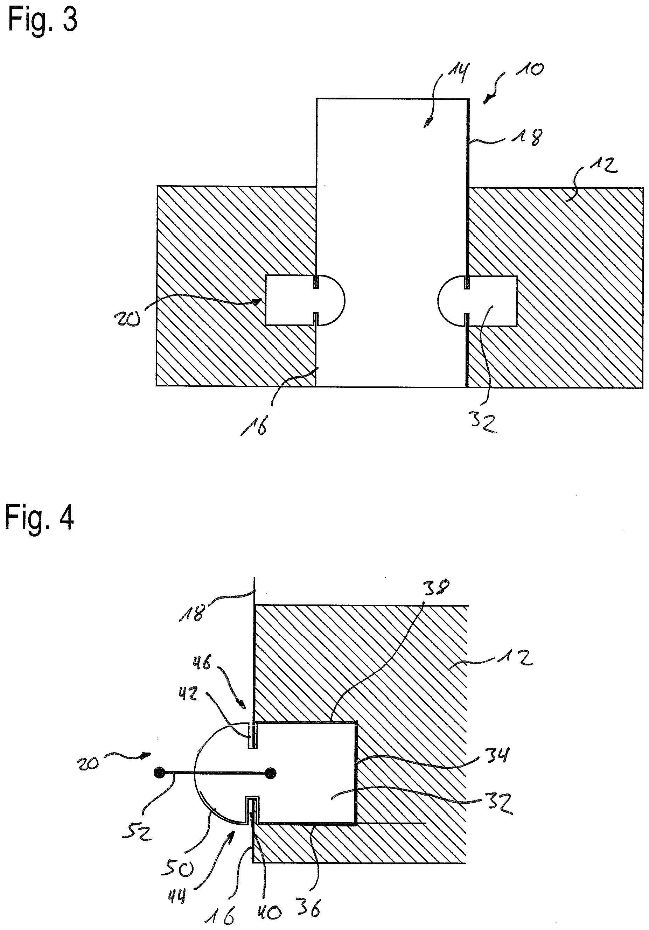

In Figur 1 ist schematisch eine Baugruppe 10 für eine Leitungsdurchführung in einem Bauteil 12 (siehe auch Figur 3) gezeigt. Das Bauteil 12 wird aus einem flüssigen Baustoff 48 hergestellt, der in eine Form 26 (siehe Figuren 2a und 2b) eingefüllt wird und in dieser aushärtet. Die Baugruppe 10 hält bei der Herstellung des Bauteils 12 einen Durchführraum 14 frei, durch den nach der Herstellung des Bauteils 12 Leitungen, beispielsweise Rohre oder Kabel, durchgeführt werden können. Zudem kann diese Baugruppe 10 den Durchführraum 14 abdichten und so den beispielsweise bei einem Brandfall den Durchtritt von Rauch, Feuer oder auch Feuchtigkeit verhindern.

Die Baugruppe 10 weist ein Positionierungsmodul 16 auf, das, wie im Folgenden dargestellt wird, der Positionierung beziehungsweise der Fixierung der Baugruppe 10 während der Herstellung des Bauteils 12 dient, sowie eine Schalungshülse 18 und ein Brandschutzmodul 20.

Das Positionierungsmodul 16 ist im Wesentlichen zylindrisch ausgebildet und weist an seinem dem Brandschutzmodul 20 abgewandten Ende 22 einen Montageflansch 24 auf. Der Montageflansch 24 kann auf oder in der Form 26 befestigt beziehungsweise fixiert werden, um die Position des Durchführraums 14 festzulegen.

Die Schalungshülse 18 ist ebenfalls zylindrisch ausgebildet und kann, ebenso wie das Positionierungsmodul, längenverstellbar ausgebildet sein. Schalungshülse 18 und Positionierungsmodul 16 sind an ihrem dem Brandschutzmodul 20 abgewandten Ende jeweils mit einer abnehmbaren Verschlusskappe 28, 30 verschlossen. Die Verschlusskappen 28, 30 können nach dem Herstellen des Bauteils 12 entfernt werden, sodass der Durchführraum 14 frei zugänglich ist.

Wie insbesondere in Figur 4 zu sehen ist, weist das Brandschutzmodul 20 ein Brandschutzelement 32 aus einem intumeszierenden Material auf, sowie eine Verstärkungshülse 34, die im Querschnitt U-förmig ausgebildet ist und das Brandschutzelement 32 in Umfangsrichtung und teilweise an den Stirnseiten abdeckt. Das Brandschutzelement 32 ist mit der Verstärkungshülse 34 stoffschlüssig verbunden, beispielsweise durch Verkleben oder durch Einspritzen des Materials des Brandschutzelements 32 in die Verstärkungshülse 34.

Wird das intumeszierende Material des Brandschutzelements 32 erhitzt, dehnt sich das intumeszierende Material aus. Da das Brandschutzmodul 20 im Durchführraum 14 angeordnet ist, dichtet das Brandschutzelement 32 durch das Aufschäumen den Durchführraum 14 ab, so dass ein Durchtritt von Feuer oder Rauch verhindert ist.

An den Stirnseiten 36, 38 des Brandschutzmoduls 20 sind jeweils durch ringförmige Schlitze 40, 42 gebildete Aufnahmen 44, 46 vorgesehen, in die das Positionierungsmodul 16 bzw. die Schalungshülse 18 in Längsrichtung L eingeschoben werden können.

Zur Herstellung eines Bauteils 12 wird das Positionierungsmodul 16 in die erste Aufnahme 42 und die längliche Schalungshülse 18 in die zweite Aufnahme 46 eingeschoben (Figur 2a) und die Verschlusskappen 28, 30 aufgesetzt. Dadurch ist ein abgeschlossener Durchführraum 14 gebildet, in den kein flüssiger Baustoff einfließen kann.

Anschließend wird diese Baugruppe 10 an der Form 26 fixiert, indem der Montageflansch 24 des Positionierungsmoduls 16 auf der Form 26 befestigt wird. Dies kann beispielsweise durch zusätzliche Befestigungselemente erfolgen, beispielsweise Schrauben oder Nägel, die durch Bohrungen am Montageflansch 24 in die Form 26 ragen.

Alternativ können am Montageflansch 24 und an der Form 26 zusammenwirkende Positionierungselemente vorgesehen sein. Beispielsweise kann am Montageflansch 24 ein magnetisches Element vorgesehen sein. Die Form 26 kann zumindest teilweise aus einem magnetisierbaren Material hergestellt sein oder ein magnetisierbares Positionierungselement aufweisen, sodass das magnetische Elemente der Baugruppe 10 an der Form 26 magnetisch haftet. Der Magnet kann auch an der Form 26 vorgesehen sein, so dass der Flansch 24 beziehungsweise das Positionierungsmodul 16 nach dem Einbau keine magnetischen Eigenschaften haben.

Das Positionierungsmodul 16 beziehungsweise der Montageflansch 24 können aber auch vor dem Zusammenfügen der Baugruppe 10 an der Form 26 befestigt werden. Nach dem Ausrichten und Fixieren der Baugruppe 10 in der Form 26 wird die Form 26 mit einem flüssigen Baustoff 48, hier Beton, gefüllt (Figur 2b), der nach dem Einfüllen aushärtet.

Nach dem Aushärten des Baustoffs 48 wird die Form 26 entfernt, wobei im hier gezeigten Ausführungsbeispiel das Positionierungsmodul 16 gemeinsam mit der Form 26 und der Verschlusskappe 28 entfernt (Figur 3) wird. Es auch denkbar ist, dass das Positionierungsmodul 16 im Bauteil 12 verbleibt und lediglich die Verschlusskappe 28 entfernt wird.

Anschließend wird die Verschlusskappe 30 der Schalungshülse 18 entfernt, sodass der Durchführraum 14 frei zugänglich ist und eine Leitung durch den Durchführraum 14 geführt werden kann.

Da diese Baugruppe 10 modulweise aufgebaut ist, ist eine schnelle und einfache Anpassung an die gewünschten Einbaubedingungen möglich. Durch eine entsprechende Auswahl der Schalungshülse 18 ist eine Anpassung der Baugruppe 10 an die gewünschte Dicke des Bauteils 12 möglich. Durch einen Austausch des Positionierungsmoduls 16 kann zudem die Position des Brandschutzmoduls 20 im Bauteil 12 variiert werden. Es ist auch denkbar, das eine längenverstellbare Schalungshülse 18 beziehungsweise ein längenverstellbares Positionierungsmodul 16 verwendet werden.

Abhängig von den geforderten Dichtigkeitsanforderungen an die Baugruppe 10 beziehungsweise die Leitungsdurchführung kann beispielsweise das Brandschutzmodul 20 entsprechend ausgewählt werden, oder weitere Dichtungsmaßnahmen eingebaut werden.

In Figur 4 ist beispielsweise eine zweite Ausführungsform eines Brandschutzmoduls 20 gezeigt. Der Aufbau dieses Brandschutzmoduls 20 entspricht im Wesentlichen dem bisher gezeigten Ausführungsbeispiel. Das Brandschutzmodul 20 weist zusätzlich ein ringförmig ausgebildetes Ankerelement 50 auf, das sich in radialer Richtung in das Brandschutzelement 32 erstreckt, sowie eine Dichtmembran 52, die sich in den Durchführraum 14 erstreckt.

Das Ankerelement 50 ist so ausgebildet, dass sich dieses sowohl in nicht expandiertem Zustand wie auch im expandierten Zustand des Brandschutzelements 32 in dieses erstreckt beziehungsweise in diesem verankert ist. Gegebenenfalls kann das Verankerungselement gemeinsam mit dem Brandschutzelement in den Durchführraum 14 verformt werden. Durch das Verankerungselement ist das Brandschutzelement insbesondere in expandiertem Zustand im Durchführraum 14 stabilisiert, so dass dieses auch größeren Belastungen, beispielsweise einem auf das Brandschutzelement 32 auftreffenden Wasserstrahl, standhalten kann und eine zuverlässige Abdichtung des Durchführraums 14 sichergestellt ist.

Die Dichtmembran 52 kann unabhängig von der Brandschutzfunktion den Durchtritt von Staub, Flüssigkeit etc. verhindert. Die Dichtmembran 52 ist beispielsweise aus einem Ethylen-Propylen-Dien-Kautschuk (EPDM) hergestellt, der für eine dauerhafte Wasserdichtigkeit der Membran sorgt.

Statt des hier gezeigten Montageflansches 24 kann das Positionierungsmodul 16 auch einen Schaumblock aufweisen, der innerhalb des Durchführraums 14 angeordnet ist. Ein solcher Schaumblock kann einfach auf die Form 26 aufgesetzt werden. Anschließend kann die Baugruppe 10 auf diesen Schaumblock aufgesetzt und an diesem fixiert werden. Der Schaumblock erfüllt also zusätzlich die Funktion der Verschlusskappe, sodass hier auf ein zusätzliches Bauteil verzichtet werden kann.

## Patentansprüche

1. Baugruppe (10) für eine Leitungsdurchführung zum Eingießen in einem Bauteil (12) mit einem Positionierungsmodul (16) zur Befestigung der Baugruppe (10) an einer Wand oder einer Verschalung, einem Brandschutzmodul (20), das ein intumeszierendes Brandschutzelement (32) aufweist, und einer länglichen Schalungshülse (18), die gemeinsam einen Durchführraum (14) für eine Leitung bilden, wobei am Brandschutzmodul (20) Aufnahmen (44, 46) zum reversiblen Befestigen der Schalungshülse (18) und/oder des Positionierungsmoduls (16) vorgesehen sind, **dadurch gekennzeichnet, dass** die Aufnahmen (44, 46) durch ringförmige Schlitze (40, 42) an den Stirnseiten (36, 38) des Brandschutzmoduls (20) gebildet sind.

2. Baugruppe nach Anspruch 1, **dadurch gekennzeichnet, dass** das Brandschutzmodul (20) ringförmig oder zylinderförmig ausgebildet ist und die Aufnahmen (44, 46) an den axialen Stirnseiten (36, 38) vorgesehen sind.

3. Baugruppe nach Anspruch 1 oder 2, **dadurch gekennzeichnet, dass** am Brandschutzmodul (20) zumindest ein Ankerelement (50) vorgesehen ist, das sich aus dem Brandschutzelement (32) nach außen erstreckt.

4. Baugruppe nach Anspruch 3, **dadurch gekennzeichnet, dass** das Ankerelement (50) ringförmig ausgebildet ist und sich in Umfangsrichtung um das Brandschutzmodul (20) erstreckt.

5. Baugruppe nach einem der vorhergehenden Ansprüche, **dadurch gekennzeichnet, dass** das Brandschutzmodul (20) innenseitig eine Dichtmembran (52) aus Ethylen-Propylen-Dien-Kautschuk aufweist.

6. Baugruppe nach einem der vorhergehenden Ansprüche, **dadurch gekennzeichnet, dass** die Baugruppe (10) eine Verstärkungshülse (34) aufweist, die das Brandschutzmodul (20) in Umfangsrichtung und/oder zumindest teilweise an den Stirnseiten (36, 38) abdeckt.

7. Baugruppe nach einem der vorhergehenden Ansprüche, **dadurch gekennzeichnet, dass** die Schalungshülse (18) und/oder das Positionierungsmodul (16) zylinderförmig ausgebildet sind und an ihrem dem Brandschutzmodul (20) entgegengesetzten Ende durch eine Verschlusskappe (28, 30) verschlossen werden können.

8. Baugruppe nach Anspruch 7, **dadurch gekennzeichnet, dass** die Schalungshülse (18) und/oder das Positionierungsmodul (16) längenverstellbar ausgebildet ist.

9. Baugruppe nach einem der Ansprüche 1 bis 6, **dadurch gekennzeichnet, dass** das Positionierungsmodul (16) aus einem zylindrischen Vollkörper gebildet ist.

10. Baugruppe nach einem der vorhergehenden Ansprüche, **dadurch gekennzeichnet, dass** das Positionierungsmodul (16) an der dem Brandschutzmodul (20) abgewandten Stirnseite einen radial abstehenden Montageflansch (24) aufweist.

11. Baugruppe nach Anspruch 10, **dadurch gekennzeichnet, dass** am Montageflansch (24) Positionierungselemente vorgesehen sind.

12. Baugruppe nach einem der vorhergehenden Ansprüche, **dadurch gekennzeichnet, dass** die Schalungshülse (18) und/oder das Positionierungsmodul (16) aus Kunststoff oder aus Pappe hergestellt sind.

## Claims

1. Assembly (10) for a line bushing for casting in a component (12), comprising a positioning module (16) for fastening the assembly (10) to a wall or formwork, a fire protection module (20) which has an intumescent fire protection element (32), and an elongate formwork sleeve (18), which together form a feed-through space (14) for a line, with receptacles (44, 46) being provided on the fire protection module (20) for reversible fastening of the formwork sleeve (18) and/or the positioning module (16), **characterized in that** the receptacles (44, 46) are formed by annular channels (40, 42) on the end faces (36, 38) of the fire protection module (20).

2. Assembly according to claim 1, **characterized in that** the fire protection module (20) is annular or cylindrical and the receptacles (44, 46) are provided on the axial end faces (36, 38).

3. Assembly according to either claim 1 or 2, **characterized in that** at least one anchor element (50) is provided on the fire protection module (20) and extends outwards from the fire protection element (32).

4. Assembly according to claim 3, **characterized in that** the anchor element (50) is annular and extends in the circumferential direction around the fire protection module (20).

5. Assembly according to any of the preceding claims, **characterized in that** the fire protection module (20) has a sealing membrane (52) on the inside, made of ethylenepropylene-diene rubber.

6. Assembly according to any of the preceding claims, **characterized in that** the assembly (10) has a reinforcing sleeve (34) which covers the fire protection module (20) in the circumferential direction and/or at least partially on the end faces (36, 38).

7. Assembly according to any of the preceding claims, **characterized in that** the formwork sleeve (18) and/or the positioning module (16) are cylindrical and can be closed at the end thereof opposite the fire protection module (20) by a closure cap (28, 30).

8. Assembly according to claim 7, **characterized in that** the formwork sleeve (18) and/or the positioning module (16) are designed to be adjustable in length.

9. Assembly according to any of claims 1 to 6, **characterized in that** the positioning module (16) is formed from a solid cylindrical body.

10. Assembly according to any of the preceding claims, **characterized in that** the positioning module (16) has a radially protruding mounting flange (24) on the end face facing away from the fire protection module (20).

11. Assembly according to claim 10, **characterized in that** positioning elements are provided on the mounting flange (24).

12. Assembly according to any of the preceding claims, **characterized in that** the formwork sleeve (18) and/or the positioning module (16) are made of plastics or cardboard.

## Revendications

1. Ensemble (10) pour un passage de conduite permettant la coulée dans une pièce (12), comportant un module de positionnement (16) pour la fixation de l'ensemble (10) sur une paroi ou un coffrage, un module de protection contre l'incendie (20) qui présente un élément de protection contre l'incendie (32) intumescent, et un manchon de coffrage (18) allongé, qui forment ensemble un espace de passage (14) pour une conduite, des logements (44, 46) étant prévus sur le module de protection contre l'incendie (20) pour la fixation réversible du manchon de coffrage (18) et/ou du module de positionnement (16), **caractérisé en ce que** les logements (44, 46) sont formés par des fentes annulaires (40, 42) sur les faces frontales (36, 38) du module de protection contre l'incendie (20).

2. Ensemble selon la revendication 1, **caractérisé en ce que** le module de protection contre l'incendie (20) est annulaire ou cylindrique et les logements (44, 46) sont prévus sur les faces frontales (36, 38) axiales.

3. Ensemble selon la revendication 1 ou 2, **caractérisé en ce qu'**au moins un élément d'ancrage (50) est prévu sur le module de protection contre l'incendie (20) et s'étend vers l'extérieur depuis l'élément de protection contre l'incendie (32).

4. Ensemble selon la revendication 3, **caractérisé en ce que** l'élément d'ancrage (50) est annulaire et s'étend dans la direction circonférentielle autour du module de protection contre l'incendie (20).

5. Ensemble selon l'une des revendications précédentes, **caractérisé en ce que** le module de protection contre l'incendie (20) présente, côté intérieur, une membrane d'étanchéité (52) en caoutchouc éthylène-propylène-diène.

6. Ensemble selon l'une des revendications précédentes, **caractérisé en ce que** l'ensemble (10) présente un manchon de renfort (34) qui recouvre le module de protection contre l'incendie (20) dans la direction circonférentielle et/ou au moins partiellement au niveau des faces frontales (36, 38).

7. Ensemble selon l'une des revendications précédentes, **caractérisé en ce que** le manchon de coffrage (18) et/ou le module de positionnement (16) sont cylindriques et peuvent être fermés, par un capot de fermeture (28, 30), au niveau de leur extrémité opposée au module de protection contre l'incendie (20).

8. Ensemble selon la revendication 7, **caractérisé en ce que** le manchon de coffrage (18) et/ou le module de positionnement (16) sont conçus de manière à pouvoir être réglés en longueur.

9. Ensemble selon l'une des revendications 1 à 6, **caractérisé en ce que** le module de positionnement (16) est formé d'un corps plein cylindrique.

10. Ensemble selon l'une des revendications précédentes, **caractérisé en ce que** le module de positionnement (16) présente une bride de montage (24) faisant saillie radialement sur la face frontale opposée au module de protection contre l'incendie (20).

11. Ensemble selon la revendication 10, **caractérisé en ce que** des éléments de positionnement sont prévus sur la bride de montage (24).

12. Ensemble selon l'une des revendications précédentes, **caractérisé en ce que** le manchon de coffrage (18) et/ou le module de positionnement (16) sont fabriqués en plastique ou en carton.
